# EUROPEAN PATENT SPECIFICATION

(11) **EP 3 056 790 B1**
(45) Date of publication and mention of the grant of the patent: **03.04.2019**
(21) Application number: 16020036.6
(22) Date of filing: 10.02.2016
(51) Int. Cl.: F16N 7/40

(54) **LUBRICATING CENTRAL UNIT FOR LUBRICATING MECHANICAL SYSTEMS**
ZENTRAL SCHMIERUNGSSYSTEM FÜR EINE MECHANISCHE VORRICHTUNG
DISPOSIF CENTRAL DE LUBRIFICATION POUR LUBRIFIER UN SYSTÈME MECANIQUE

(30) Priority: 11.02.2015 IT MI20150190
(43) Date of publication of application: 17.08.2016
(73) Proprietor: O.M.C.A. di Bassi Giovanni, 26010 Offanengo (CR) (IT)
(72) Inventor: Bassi, Erik, I-26010 Offanengo (CR) (IT)
(74) Representative: Rastelli, Franco

(56) References cited:
- EP-A1- 0 728 984
- EP-A2- 1 561 908
- US-A- 4 012 012
- US-A- 4 953 663
- US-A- 5 318 152
- US-A1- 2013 183 138
- US-B2- 8 281 563

## Description

### BACKGROUND OF THE INVENTION

The present invention relates to a lubricating central unit, for lubricating mechanical systems in general, for example glass processing mechanical systems.

A conventional type of lubricating central unit usually comprises a tank, a pump and one or more manifolds, generally of a four-zone type, from which individual lubricating lines extend.

Such a central unit may also comprise a second tank with a second pump.

Each lubricating line comprises a solenoid valve and a pressure switch, designed for properly defining suitable operating parameters for each lubricating line, that is the operating pressure, lubricating cycle frequency and lubricating time.

The lubricating oil supply line and the related return line is the same and, for this reason, even if each said line may be designed with dedicated parameters, the system is not able to manage said lines independently of one another.

In case of an overlapping of several lines connected to the same pump, the system will operate according to one of the following operating modes.

The last line which is started in an overlapping relationship with the preceding lines (one or more) will define the real "pressurizing cycle end" also for the previously started lines.

The lines which are started in an overlapping relationship with one another cannot end their operating cycle until the last operating line is connected to the same pump and does not end its operating cycle.

Upon starting the first line, the following lines which are started in an overlapping relationship will be put in a standby condition, and will be started in a timed order, a few seconds after the end of the operating cycle of the preceding line.

It should be apparent that, in such a system, the lines may be designed in an independent manner from one another, but it should be apparent that, in a case of an overlapping of several lines, in both cases, a truly independent operation cannot be assured, since it will be always related to the other lines driven by the same pump.

Another drawback of prior lubricating central units is that the system does not have a great operating flexibility.

The system, when designed for one oil (one or more manifolds coupled together to operate with the same oil) or two oils (generally one or more manifolds connected to operate with the pump of the first oil and one or more manifolds connected to operate with the pump of the second oil) is a closed and not very flexible one.

In fact, a conventional system does not allow modifications to the lines, that is does not allow to change a line by shifting it from the first to a second oil operation, or does not allow to add lines on the same oil operation.

Moreover, it is difficult and generally not possible to add, for example, a third oil to define further operating lines, especially when it should be done after a first operating step.

Document US 4 953 663 A discloses the preamble of claim 1.

### SUMMARY OF THE INVENTION

The aim of the present invention is to provide a novel lubricating central unit, which comprises truly independent lubricating lines, both with respect to the setting of the operating parameters and with respect to the operation itself.

Within the scope of the above aim, a main object of the invention is to provide such a lubricating central unit which is very flexible from the operation standpoint.

Another object is to provide a lubricating central unit having modular characteristics.

Yet another object of the present invention is to provide such a structure which may be made starting from easily available elements and materials and which, moreover, is very competitive from a mere economic standpoint.

Yet another object of the present invention is to provide such a construction which, owing to its specifically designed constructional features, is very reliable and safe in operation.

The above mentioned aim and objects, as well as yet other objects, which will become more apparent hereinafter, are achieved by the lubricating central unit of claim 1. Further preferred embodiments of the invention are characterized in the remaining claims.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of an indicative but not limitative example, in the accompanying drawings, where:
Figure 1 is a block diagram of the lubricating central unit according to the present invention;

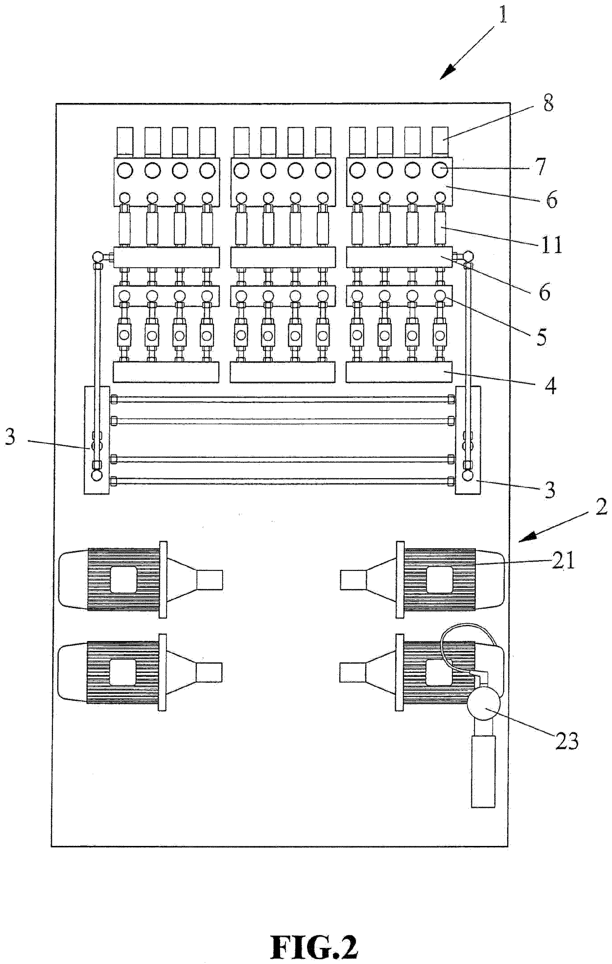

Figure 2 is a front view of the lubricating central unit; and

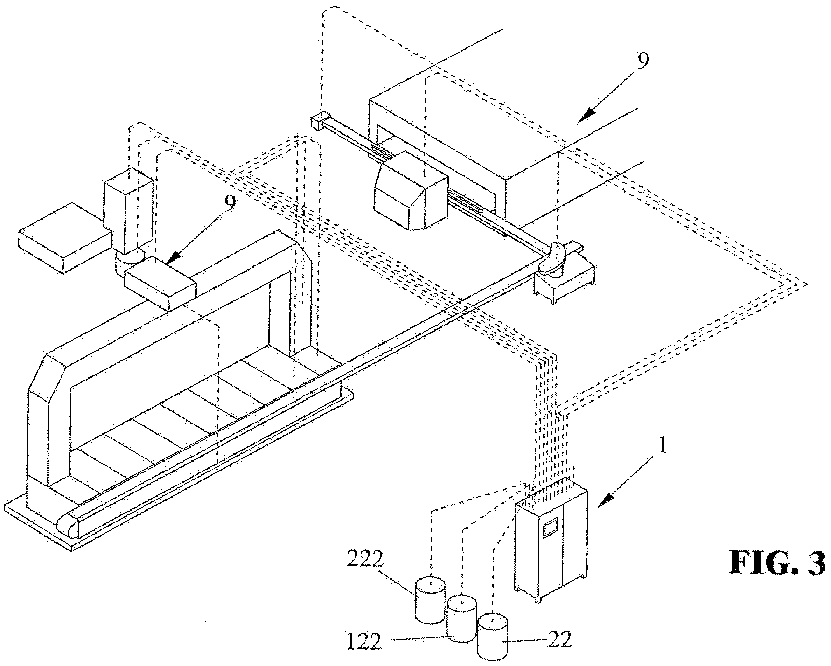

Figure 3 is a perspective view showing an application of the central unit to a generic mechanical system.

### DESCRIPTION OF THE PREFERRED EMBODIMENTS

With reference to the number references of the above mentioned figures, the lubricating central unit, according to the present invention, which has been generally indicated by the reference number 1, comprises at least one source of a first oil, indicated by the reference number 2, designed for supplying a first oil to an oil dispenser for a supply line and an return line, and being indicated by the reference number 3.

The oil source 2 comprises a first hydraulic motor pump 21 adapted to take oil from an oil tank 22 including a respective oil level indicator 23.

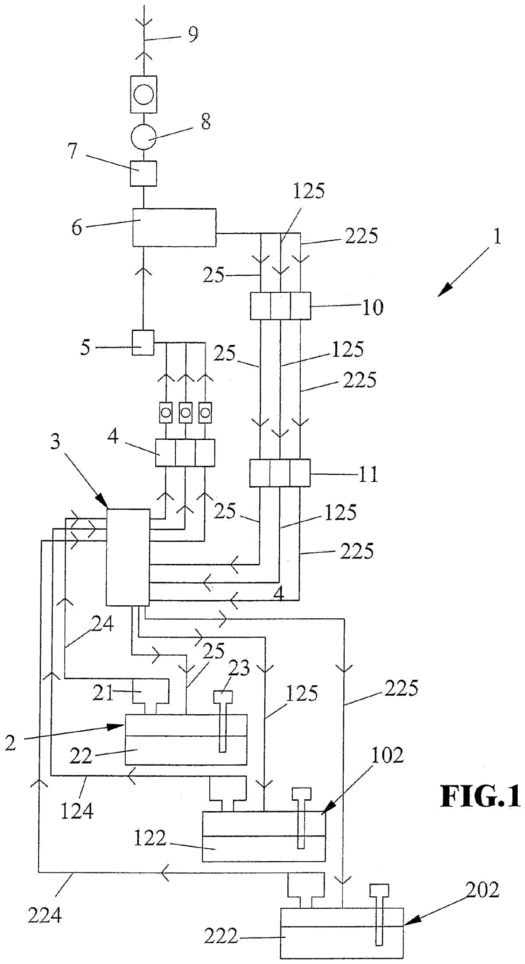

The diagram of Figure 1 shows a practical embodiment wherein the central unit comprises a second oil source 102 and a third oil source 202, each of them comprising a respective oil tank 122 and 222.

Each oil source 102 and 202 is coupled to a supply and return line oil dispenser 3 by means of respective and independent supply and return lines.

In particular, the first source 2 is connected to the supply line and return line oil dispenser 3 by a first supply line 24 and a first return line 25.

The second oil source 102 is connected to the supply line and return line oil dispenser 3 by a second supply line 124 and a second return line 125.

The third source 202 is connected to the supply line and return line oil dispenser 3 by means of a third supply line 224 and a third return line 225.

The first supply line 24 of the first oil connects the supply line and return line oil dispenser 3 to a respective distributor manifold 4 in turn connected to a switching device 5.

The switching device 5 sends the first oil to a valve block 6, which, through a respective valve 7 and a pressure switch 8, sends the first oil to a user device 9.

The return oil passes through the valve block 6 and, through the return line 25, arrives at the supply line and return line oil dispenser 3, by passing through the distributor manifold 10 and a stabilizing valve 11.

The second supply line 124 of the second oil connects the supply line and the return line oil dispenser 3 to a respective distributor manifold 4, in turn connected to a switching device 5.

The switching device 5 sends the second oil to a valve block 6 which, through a respective valve 7 and a pressure switch 8, sends the first oil to the user device 9.

The second return oil passes through the valve block 6 and, through the return line 125, arrives at the supply line and return line oil dispenser 3, by passing through the distributor manifold 10 and a stabilizing valve 11.

The third supply line 224 of the third oil connects the supply line and return line oil dispenser 3 to a respective distributor manifold 4 in turn connected to a switching device 5.

The switching device 5 sends the third oil to a valve block 6 which, through a respective valve 7 and a pressure switch 8, sends the third oil to the user device 9.

The third return oil passes through the valve block 6 and, through the second return line 125, arrives at the supply line and return line oil dispenser 3, by passing through the distributor manifold 10 and stabilizing valve 11.

The lubricating central unit according to the present invention provides a lubricating line system including a plurality of lubricating lines which are truly independent of one another both in setting the respective parameters and in operation.

Owing to the provision of the valve block 6, the supply and return manifolds, the switching devices 5, and the supply line and return line oil dispenser 3, for each supply and return line, it has been possible to separate the supply lines from the return lines, thereby each said line is adapted to start and end its operating cycle independently of any other lines which would be started in an overlapping relationship.

The present system allows to provide a very operating flexible installation.

In fact, it is possible, for example, to start with a basic installation or system, including only four lines and one oil, that is with a single oil tank and related pump, and then integrate it when and as desired.

By mounting the related components, it will be possible to add further lines depending on requirements, for example four further lines at the beginning, then two and then four further lines, and so on.

If the central unit is designed at the start with a single oil, it will also be possible to add even successively, depending on requirements, the manifolds, the pipes and all the elements (pumps, tank, and so on) required for adding the second oil and/or the third oil, where two oils are already present.

At any time and for any needs (a broken line, a choice of using another oil and so on) it will be always possible to change the hydraulic arrangement of each line to associate it to the type of oil to be used.

Advantageously, the software managing the central unit would be already designed to properly manage and design the change.

It has been found that the invention fully achieves the intended aim and objects.

In fact, the invention has provided a lubricating central unit with a plurality of independent lines, wherein each individual line, which can be designed in a manner independent of one another, may be pressurized by a given pressure which may be set in order to allow to load one or more injectors arranged at the end of the line.

As the line has achieved a set pressure, and accordingly as one or more injectors have been loaded, the switching off of the pressure, that is of the line, will allow the oil to exit one or more injectors and consequently lubricate the target part.

The central unit according to the present invention is structurally and operatively distinguished from prior art central units which include simple manifolds and cannot change the oil of each individual line, but only that of each single or individual manifold, and generally this operation, besides being a very complex one, is also very difficult or even not possible, also because of the reduced operating spaces.

Moreover, if a sufficient space is not available, and usually a sufficient space is not available, conventional central units do not allow to add a further manifold thereby allowing to shift a line from one oil to another; moreover, it would not be possible to manage the third oil.

The truly independent lines of the central unit according to the present invention allow to properly control the actual operation of each said line, to monitor it and to detect any possible problems and failure alarms.

The operation flexibility of the subject central unit has allowed to build standardized modules which provide an easy and immediate managing of the replacing parts and the maintenance by the user himself.

Moreover, the inventive central unit is also distinguished because of its modularity and designing flexibility compared to prior central units which are usually designed and built as a personalized system for each client.

In practicing the invention, the materials used, as well as the contingent size and shapes can be any, depending on requirements.

## Claims

1. A modular lubricating central unit (1), for lubricating mechanical systems in general, comprising at least one oil source (2) adapted to supply a plurality of supply and return lines, each of which is coupled to a user device, each of said lines being a completely independent one both in setting its parameters and in its operation, said supply lines being separated from said return lines thereby each said line may start and end its operating cycle independently of any other lines which would start in an overlapping relationship, said oil source (2) comprising a hydraulic motor pump adapted to take oil from a respective oil tank (22) including a respective oil level indicator, **characterized in that** said lubricating central unit comprises a first source (2) of the first oil, adapted to supply a first oil to a supply line and return line oil dispenser (3), said first oil source (2) being constituted by a hydraulic motor pump (21) adapted to take oil from an oil tank (22) including a respective oil level indicator (23), a second oil source (102) and a third oil source (202), each of which comprises a respective oil tank (122, 222), each oil source (2, 102, 202) being coupled to the supply line and return line oil dispenser by respective and independent supply and return lines, the first source (2) being coupled to the dispenser (3) by a first supply line (24) and a first return line (25), the second source (102) being coupled to the dispenser (3) by a second supply line (124) and a second return line (125), the third source (202) being coupled to the oil dispenser (3) by a third supply line (224) and a third return line (225), the first supply line (24) of the first oil connecting the oil dispenser (3) to a respective distributing manifold (4) in turn connected to a switching device (5), the switching device (5) sending the first oil to a valve block (6) which, through a respective valve (7) and a pressure switch (8), sends the first oil to the user device (9), the return oil passing through the valve block (6) and, through the first return line (25), arriving at the oil dispenser (3) by passing through the distributing manifold (10) and a stabilizing valve (11), the second supply line (124) of the second oil connecting the dispenser (3) to a respective distributing manifold (4), in turn connected to a switching device (5), the switching device (5) sending the second oil to a valve block (6) which, through a respective valve (7) and a pressure switch (8), sends the first oil to the user device (9), the second return oil passing through the valve block (6) and, through the second return line (125), arriving at the dispenser (3) by passing through the distributing manifold (10) and a stabilizing valve (11), the third supply line (224) of the third oil connecting the dispenser (3) to a respective distributing manifold (4), in turn connected to a switching device (5), the switching device (5) sending the third oil to a valve block (6) which, through a respective valve (7) and a pressure switch (8), sends the third oil to the user device (9), the third return oil passing through the valve block (6) and, through the third return line (225) arriving at the dispenser (3), by passing through the distributing manifold (10) and a stabilizing valve (11).

2. A central unit, according to claim 1, **characterized in that** said central unit is so designed as to change a hydraulic arrangement of each line to associate it with a type of oil to be used.

3. A central unit, according to claim 2, **characterized in that** said central unit comprises software means for managing said central unit adapted to allow to automatically change a hydraulic arrangement of said lines to associate it with the type of oil to be used.

4. A central unit, according to any preceding claims, **characterized in that** said central unit is so constructed that each said single line, which may be designed in an independent manner from one another, may be pressurized by a given pressure which is set to allow to load one or more injectors arranged at an end portion of the line, and **that**, as the line has achieved a set pressure, and accordingly said one or more injectors have been loaded, the switching off of the pressure, that is of the line, allows the respective oil to exit said one or more injectors and to lubricate consequently a target part.

## Patentansprüche

1. Modulare Schmierungszentraleinheit (1) zum Schmieren mechanischer Systeme im Allgemeinen, umfassend mindestens eine Ölquelle (2), die geeignet ist, eine Vielzahl von Zu- und Rücklaufleitungen zu versorgen, von denen jede mit einer Benutzervorrichtung gekoppelt ist, wobei jede der Leitungen sowohl bei der Einstellung ihrer Parameter als auch bei ihrem Betrieb eine völlig unabhängige ist, wobei die Zulaufleitungen von den Rücklaufleitungen getrennt sind, wodurch jede Leitung ihren Betriebszyklus unabhängig von allen anderen Leitungen beginnen und beenden kann, die in einer überlappenden Verbindung beginnen würden, wobei die Ölquelle (2) eine Hydraulikmotorpumpe umfasst, die geeignet ist, Öl aus einem jeweiligen Öltank (22) mit einer entsprechenden Ölstandsanzeige zu entnehmen, **dadurch gekennzeichnet, dass** die Schmierungszentraleinheit eine erste Quelle (2) des ersten Öls umfasst, geeignet zum Zuführen eines ersten Öls zu einem Zu- und Rücklaufölspender (3), wobei die erste Ölquelle (2) aus einer Hydraulikmotorpumpe (21) besteht, die geeignet ist, Öl aus einem Öltank (22) mit einer entsprechenden Ölstandsanzeige (23), einer zweiten Ölquelle (102) und einer dritten Ölquelle (202) zu entnehmen, von denen jede einen jeweiligen Öltank (122, 222) umfasst, wobei jede Ölquelle (2, 102, 202) über jeweils unabhängige Zu- und Rücklaufleitungen mit dem Ölspender der Zulaufleitung gekoppelt ist, wobei die erste Quelle (2) über eine erste Zulaufleitung (24) und eine erste Rücklaufleitung (25) mit dem Spender (3) gekoppelt ist, wobei die zweite Quelle (102) über eine zweite Zulaufleitung (124) und eine zweite Leitung (125) mit dem Spender (3) gekoppelt ist, wobei die dritte Quelle (202) über eine dritte Zulaufleitung (224) und eine dritte Rücklaufleitung (225) mit dem Ölspender (3) gekoppelt ist, wobei die erste Zulaufleitung (24) des ersten Öls den Ölspender (3) mit einem jeweiligen Verteiler (4) verbindet, der wiederum mit einer Schaltvorrichtung (5) verbunden ist, wobei die Schaltvorrichtung (5) das erste Öl zu einem Ventilblock (6) leitet, der über ein entsprechendes Ventil (7) und einen Druckschalter (8) das erste Öl an die Benutzervorrichtung (9) sendet, wobei das Rücklauföl, das durch den Ventilblock (6) und durch die erste Rücklaufleitung (25) fließt, am Ölspender (3) ankommt, indem es den Verteiler (10) und ein Stabilisierungsventil (11) passiert, wobei die zweite Zulaufleitung (124) des zweiten Öls, die den Spender (3) mit einem jeweiligen Verteiler (4) verbindet, wiederum mit einer Schaltvorrichtung (5) verbunden ist, wobei die Schaltvorrichtung (5) das zweite Öl zu einem Ventilblock (6) leitet, der über ein entsprechendes Ventil (7) und einen Druckschalter (8), das erste Öl an die Benutzervorrichtung (9) sendet, wobei das zweite Rücklauföl durch den Ventilblock (6) und durch die zweite Rücklaufleitung (125) durch den Verteiler (10) und ein Stabilisierungsventil (11) zum Verteiler (3) gelangt, wobei die dritte Zulaufleitung (224) des dritten Öls den Verteiler (3) mit einem jeweiligen Verteiler (4) verbindet und wiederum mit einer Schaltvorrichtung (5) verbunden ist, die Schaltvorrichtung (5) das dritte Öl zu einem Ventilblock (6) leitet, der über ein entsprechendes Ventil (7) und einen Druckschalter (8) das dritte Öl zu der Benutzervorrichtung (9) leitet, wobei das dritte Rücklauföl durch den Ventilblock (6) und über die dritte Rücklaufleitung (225) zum Dispenser (3) gelangt, indem es durch den Verteiler (10) und ein Stabilisierungsventil (11) geleitet wird.

2. Zentraleinheit nach Anspruch 1, **dadurch gekennzeichnet, dass** die Zentraleinheit so ausgelegt ist, dass sie eine hydraulische Anordnung jeder Leitung ändert, um sie mit einer zu verwendenden Ölsorte zu verbinden.

3. Zentraleinheit nach Anspruch 2, **dadurch gekennzeichnet, dass** die Zentraleinheit Softwaremittel zum Verwalten der Zentraleinheit umfasst, die angepasst sind, um es zu ermöglichen, eine hydraulische Anordnung der Leitungen automatisch zu ändern, um sie mit der zu verwendenden Ölsorte zu verbinden.

4. Zentraleinheit nach vorhergehenden Ansprüchen, **dadurch gekennzeichnet, dass** die Zentraleinheit so konstruiert ist, dass jede einzelne Leitung, die unabhängig voneinander ausgelegt werden kann, mit einem gegebenen Druck unter Druck gesetzt werden kann, der so eingestellt ist, dass ein oder mehrere an einem Endabschnitt der Leitung angeordnete Injektoren belastet werden können, und dass, wenn die Leitung einen eingestellten Druck erreicht hat und entsprechend der eine oder die mehreren Injektoren belastet wurden, das Abschalten des Drucks, d. h. der Leitung, das Austreten des jeweiligen Öls aus dem einen oder den mehreren Injektoren und damit die Schmierung eines Zielteils ermöglicht.

## Revendications

1. Dispositif central de lubrification modulaire (1) pour lubrifier un système mécanique en général, comprenant au moins une source d'huile (2) adaptée pour alimenter une pluralité de lignes d'alimentation et de retour, dont chacune est couplée à un dispositif utilisateur, chacune desdites lignes étant une complètement indépendante à la fois dans son paramétrage et dans son fonctionnement, lesdites lignes d'alimentation étant séparées desdites lignes de retour, ainsi, chaque dite ligne peut démarrer et terminer son cycle de fonctionnement indépendamment de n'importe quelle autre ligne qui démarrerait dans une relation en chevauchement, ladite source d'huile (2) comprenant une pompe à moteur hydraulique adaptée pour prendre de l'huile d'un réservoir d'huile (22) respectif incluant un indicateur de niveau d'huile respectif, **caractérisé en ce que** ledit dispositif central de lubrification comprend une première source (2) de la première huile, adaptée pour fournir une première huile à un distributeur d'huile de ligne d'alimentation et de ligne de retour (3), ladite première source d'huile (2) étant constituée d'une pompe à moteur hydraulique (21) adaptée pour prendre de l'huile d'un réservoir d'huile (22) incluant un indicateur de niveau d'huile respectif (23), une deuxième source d'huile (102) et une troisième source d'huile (202), dont chacune comprend un réservoir d'huile (122, 222) respectif, chaque source d'huile (2, 102, 202) étant couplée au distributeur d'huile de ligne d'alimentation et de ligne de retour par des lignes d'alimentation et de retour indépendantes respectives, la première source (2) étant couplée au distributeur (3) par une première ligne d'alimentation (24) et une première ligne de retour (25), la deuxième source (102) étant couplée au distributeur (3) par une deuxième ligne d'alimentation (124) et une deuxième ligne de retour (125), la troisième source (202) étant couplée au distributeur d'huile (3) par une troisième ligne d'alimentation (224) et une troisième ligne de retour (225), la première ligne d'alimentation (24) de la première huile connectant le distributeur d'huile (3) à un collecteur de distribution (4) respectif connecté en retour à un dispositif de commutation (5), le dispositif de commutation (5) envoyant la première huile à un bloc de clapets (6) qui, par un clapet respectif (7) et un pressostat (8), envoie la première huile vers le dispositif utilisateur (9), l'huile de retour passant par le bloc de clapets (6) et, par la première ligne de retour (25), arrivant au distributeur d'huile (3) en passant par le collecteur de distribution (10) et un clapet stabilisateur (11), la deuxième ligne d'alimentation (124) de la deuxième huile connectant le distributeur (3) à un collecteur de distribution respectif (4), connecté en retour à un dispositif de commutation (5), le dispositif de commutation (5) envoyant la deuxième huile à un bloc de clapets (6) qui, par un clapet respectif (7) et un pressostat (8), envoie la première huile au dispositif utilisateur (9), la deuxième huile de retour passant par le bloc de clapets (6) et, par la deuxième ligne de retour (125), arrivant au distributeur (3), en passant par le collecteur de distribution (10) et un clapet stabilisateur (11), la troisième ligne d'alimentation (224) de la troisième huile connectant le distributeur (3) à un collecteur de distribution respectif (4), connecté en retour à un dispositif de commutation (5), le dispositif de commutation (5) envoyant la troisième huile à un bloc de clapets (6) qui, par un clapet respectif (7) et un pressostat (8), envoie la troisième huile au dispositif utilisateur (9), la troisième huile de retour passant par le bloc de clapets (6) et, par la troisième ligne de retour (225), arrivant au distributeur (3), en passant par le collecteur de distribution (10) et un clapet stabilisateur (11).

2. Dispositif central, selon la revendication 1, **caractérisé en ce que** ledit dispositif central est conçu de façon à changer un agencement hydraulique de chaque ligne pour l'associer à un type d'huile à utiliser.

3. Dispositif central, selon la revendication 2, **caractérisé en ce que** ledit dispositif central comprend un moyen logiciel pour gérer ledit dispositif central adapté pour permettre de changer automatiquement un agencement hydraulique desdites lignes pour l'associer au type d'huile à utiliser.

4. Dispositif central, selon l'une quelconque des revendications précédentes, **caractérisé en ce que** ledit dispositif central est construit de façon à ce que chaque dite ligne unique qui peut être conçue de manière indépendante l'une de l'autre, puisse être pressurisée à une pression donnée qui est réglée pour permettre de charger un ou plusieurs injecteur(s) agencé(s) à une partie d'extrémité de la ligne, et que, lorsque la ligne a atteint une pression réglée, et que conformément, lesdits un ou plusieurs injecteur(s) a/ont été chargé(s), l'arrêt de la pression, c'est à dire de la ligne, permet à l'huile respective de sortir desdits un ou plusieurs injecteur(s) et de lubrifier une pièce cible par conséquent.
